# FASCICULE DE BREVET EUROPEEN

(11) **EP 3 123 579 B1**
(45) Date de publication et mention de la délivrance du brevet: **03.04.2019**
(21) Numéro de dépôt: 15715330.5
(22) Date de dépôt: 25.02.2015
(51) Int. Cl.: H02G 3/22, B60R 16/02

(54) **DISPOSITIF DE TRAVERSÉE ÉTANCHE DE FAISCEAU ÉLECTRIQUE**
VORRICHTUNG FÜR DIE DICHTE DURCHFÜHRUNG EINES KABELBÜNDELS
DEVICE FOR SEALED PASSAGE OF A CABLE BUNDLE

(30) Priorité: 27.03.2014 FR 1452649
(43) Date de publication de la demande: 01.02.2017
(73) Titulaire: Renault S.A.S., 92100 Boulogne-Billancourt (FR)
(72) Inventeur: JOURNIAC, Christian, F-91440 Bures sur Yvette (FR)
(86) Numéro de dépôt international: PCT/FR2015/050448
(87) Numéro de publication internationale: WO 2015/145003

(56) Documents cités:
- EP-A1- 0 967 425
- WO-A1-99/30398
- DE-C1- 19 908 657
- FR-A1- 2 991 114
- US-A- 5 545 854

## Description

### 1. Domaine de l'invention

La présente invention concerne le domaine de l'automobile.

Plus particulièrement, l'invention concerne un dispositif de traversée étanche de faisceau électrique, notamment à travers l'ouverture de passage d'une cloison.

### 2. Solutions de l'art antérieur

Pour permettre des liaisons électriques entre les différents composants situés dans le compartiment moteur et leurs moyens de commandes situés dans l'habitacle, il est nécessaire de faire passer des câblages, ou faisceaux électriques, à travers le tablier du véhicule par des ouvertures prévues pour cela. Cependant, le compartiment moteur étant source de bruit et ouvert sur l'extérieur au moins par le dessous du véhicule, il est nécessaire que ces traversées de cloison soient le plus possible étanches et isolantes thermiquement et acoustiquement.

Pour répondre à ce besoin, de nombreux dispositifs ont ainsi été développés. De manière classique, ces dispositifs se présentent sous la forme d'une pièce de révolution en matériau souple comportant une partie centrale interne creuse tubulaire afin de recevoir le faisceau électrique.

Le document US5545854A divulgue un dispositif de traversée étanche de faisceau électrique ou de câble comportant deux demi bagues identiques dont les composants sont assemblés axialement. Les deux demi bagues assemblées sont accouplées radialement sur le câble et insérées à verrouillage dans l'orifice de cloison pour procurer un joint étanche à l'air entre le câble et l'orifice.

Le document FR2991114 divulgue un dispositif de traversée étanche de faisceau électrique à travers l'ouverture de passage d'une cloison, réalisé sous la forme d'au moins une première pièce de révolution en matériau souple constituée de deux demi coquilles séparables et de deux autres demi pièces en matériau rigide qui entourent les deux demi coquilles pour les maintenir assemblées d'une manière étanche.Le document DE19908657C1 divulgue un dispositif pour couvrir et étanchéifier un orifice de passage dee câble dans une paroi d'armoire électrique.

Le document WO9930398 divulgue un dispositif et un procédé pour tenir et faire traverser des objets longiformes.

Le document EP0967425A1 divulgue un dispositif de traversée de paroi directement moulé sur un faisceau de câblage et comportant un anneau solidarisé lors du surmoulage avec un système de fixation.

Tous ces dispositifs de traversée de cloison présentent toutefois l'inconvénient d'être difficilement modulables du fait que le matériau dans lequel ils sont conçus possède un coefficient d'élasticité relativement limité ce qui provoque un temps long ainsi qu'une difficulté d'installation relativement importante pour ne pas détériorer la pièce.

Un autre inconvénient de tels dispositifs est que lorsqu'on prévoit d'introduire par le trou un faisceau de câbles déjà raccordés sur leurs boitiers respectifs, il devient nécessaire de prévoir un trou suffisamment grand pour faire passer ces boitiers ce qui n'est pas satisfaisant.

Un autre inconvénient d'un tel art antérieur est que l'étanchéité ainsi que l'isolation sont relativement faibles du fait de la déformation des matériaux et donc de la déformation de tels dispositifs une fois traversés par les faisceaux électriques ce qui n'est pas non plus satisfaisant.

Encore un autre inconvénient d'un tel dispositif est qu'il est relativement difficile à mettre en oeuvre.

### 3. Objectifs de l'invention

L'invention a notamment pour objectif de résoudre au moins en partie les inconvénients de l'art antérieur.

Plus particulièrement, un objectif d'au moins un mode de réalisation est de fournir un dispositif qui fournisse une relative étanchéité de l'habitacle lorsque les faisceaux électriques sont montés traversant.

Un autre objectif d'au moins un mode de réalisation est de fournir un tel dispositif qui limite les efforts de montage et qui soit en outre adaptable à la plupart des situations connues.

Encore un autre objectif d'au moins un mode de réalisation de l'invention est de fournir un tel dispositif dont la masse est relativement réduite par rapport aux techniques connues de l'art antérieur.

Un autre objectif est de fournir un tel dispositif qui soit simple d'utilisation et peu coûteux à mettre en oeuvre.

### 4. Résumé de l'invention

Ces objectifs, ainsi que d'autres qui apparaîtront par la suite, sont atteints à l'aide d'un dispositif de traversée d'un faisceau électrique par une ouverture d'une cloison comprenant au moins un premier ensemble présentant :
- une partie interne creuse de profil tubulaire présentant un axe principal de faisceau destinée à recevoir le faisceau électrique ;
- une partie externe coaxiale à la partie interne comprenant une lèvre externe d'étanchéité destinée à venir en appui périphérique autour et contre un isolant placé en périphérie de l'ouverture,
   ledit premier ensemble étant constitué de deux premières demi-platines séparables aptes à se refermer autour du faisceau électrique, lesdites demi-platines étant assemblées entre elles l'une contre l'autre.

Selon l'invention, le dispositif comprend en outre un deuxième ensemble, constitué de deux deuxièmes demi-platines séparables aptes à se refermer autour du faisceau électrique, les demi-platines étant assemblées entre elles l'une contre l'autre, au moins une portion des demi-platines venant se loger de manière ajustée au contact de la partie interne du premier ensemble.

Ainsi, l'invention propose une approche nouvelle et inventive permettant de résoudre au moins en partie certains des inconvénients de l'art antérieur. Notamment, l'invention permet de mettre en oeuvre un dispositif fournissant une relative étanchéité de l'habitacle et ce quelque soit la dimension et le nombre de faisceaux qui doivent traverser le dispositif. En effet, ce dispositif étant constitué d'ensembles totalement séparables autour du faisceau, il est ainsi facile de s'adapter suivant la dimension et le nombre de faisceaux de par cette modularité permise. Par ailleurs, la lèvre permet d'assurer un appui étanche contre la cloison.

Dans un mode de réalisation de l'invention, le premier ensemble présente un premier côté destiné à faire face à un habitacle de véhicule et un deuxième côté sensiblement opposé au premier côté, la partie interne se prolongeant par un rebord externe à l'endroit du premier côté, c'est-à-dire du côté de l'habitacle.

De ce fait, cela permet de faciliter la manutention d'un tel dispositif.

Selon l'invention, le dispositif comprend en outre un troisième ensemble d'isolation phonique, constitué de deux troisièmes platines séparables aptes à se refermer autour du faisceau électrique, lesdites platines étant assemblées entre elles l'une contre l'autre, lesdites troisièmes demi-platines venant se placer autour du rebord externe de la partie interne du premier ensemble.

Ainsi, cela permet d'améliorer l'isolation du dispositif, et notamment l'isolation phonique.

Dans un mode de réalisation particulier de l'invention, le premier ensemble comprend une deuxième partie interne creuse de profil tubulaire présentant un axe parallèle à l'axe principal du faisceau destinée à recevoir un autre faisceau électrique. Cette deuxième partie interne creuse peut par exemple permettre le passage d'un dispositif de commande d'ouverture de capot.

Selon un mode de réalisation de l'invention, le troisième ensemble présente un orifice, de sorte que la deuxième partie interne débouche sur cet orifice. Il est à noter que cet orifice est placé sur un plan de joint correpondant à un plan du troisième ensemble.

De ce fait, cela facilite l'assemblage des différents éléments constitutifs du dispositif et cela permet en outre que la deuxième partie interne soit débouchante lorsque le troisième ensemble est monté.

Dans une variante, le dispositif comprend en outre un quatrième ensemble constitué de deux quatrièmes platines séparables, les quatrièmes platines étant assemblées entre elles l'une contre l'autre, chacune desdites quatrièmes platines venant se placer autour d'une portion respective desdites premières platines, en appui contre la lèvre.

De ce fait, cela permet d'amplifier l'isolation du dispositif, et notamment l'étanchéité à l'air.

Selon un autre aspect de l'invention, les deux premières platines comprennent des moyens de fixation complémentaires ménagés sur le premier côté, pour relier les deux premières demi-platines.

Ainsi, cela permet de maintenir fixe les deux parties du dispositif et ce, avec des moyens simples et peu coûteux à mettre en oeuvre.

Dans une variante de l'invention, le premier ensemble comprennent des moyens de retenue du dispositif sur la cloison. Dans ce cas, les moyens de retenue peuvent comprendre un système d'enclipsage.

Selon plusieurs modes de réalisation, au moins l'un desdits deuxième, troisième et quatrième ensembles peut être réalisé en EPDM.

Dans une autre variante, le premier ensemble peut être réalisé en matériau rigide.

### 5. Liste des figures

D'autres caractéristiques et avantages de l'invention apparaitront plus clairement à la lecture de la description suivante d'un mode de réalisation, donné à titre de simple exemple illustratif et non limitatif, et des dessins annexés, parmi lesquels :
- les figures 1 et 2 sont des vues en perspective de face d'un dispositif de traversée selon un mode de réalisation de l'invention ;
- la figure 3 est une vue en perspective de dos d'un dispositif de traversée selon le mode de réalisation de la figure 1 ;
- la figure 4 est une vue en perspective partiellement éclatée de dos d'un dispositif de traversée selon le mode de réalisation de la figure 1 ;
- la figure 5 est une vue en perspective éclatée de dos d'un dispositif de traversée selon le mode de réalisation de la figure 1 ;
- la figure 6 est une vue en coupe d'une partie du dispositif selon le mode de réalisation de la figure 1.

### 6. Description détaillée d'un mode de réalisation

Dans la suite de la demande, on entend par vue de face une vue du dispositif lorsqu'on se place du côté « habitacle » et par vue de dos une vue du dispositif lorsqu'on se place du côté « moteur ».

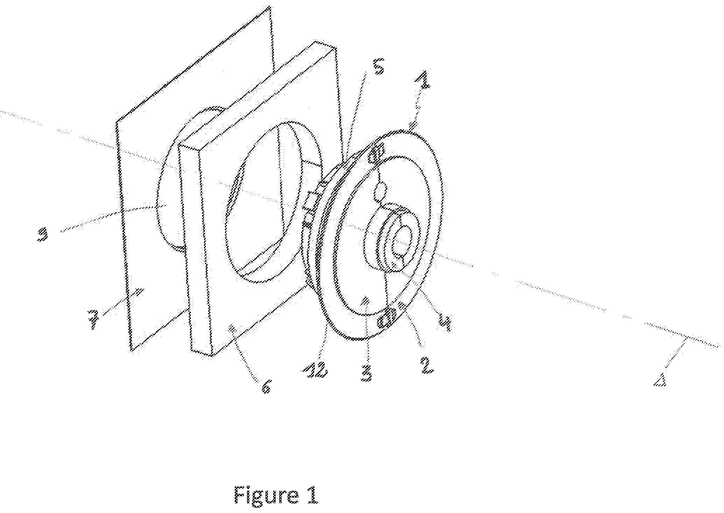

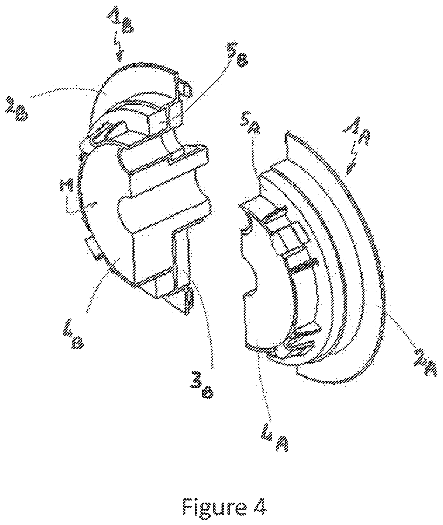

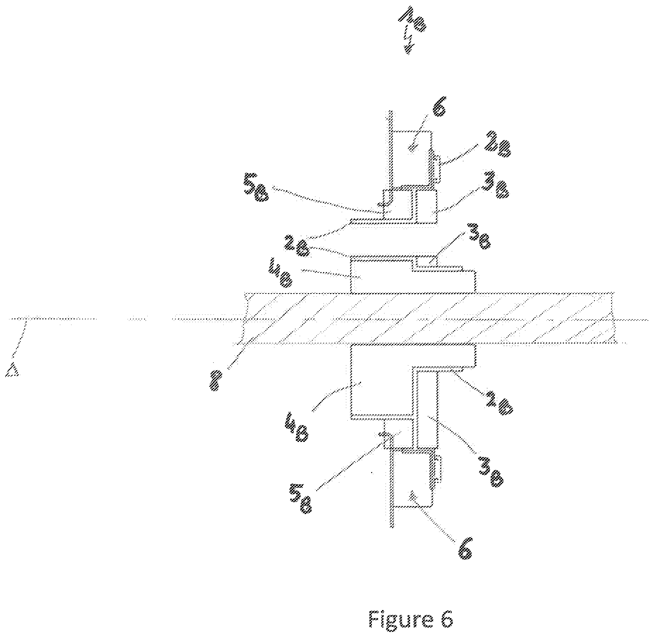

On présente maintenant, en relation avec les figures 1 à 6, un mode de réalisation de l'invention.

Comme illustré sur ces figures, le dispositif 1 de traversée d'un faisceau électrique 8 est conçu de sorte à pouvoir venir se loger par une ouverture 9 d'une cloison 7. Dans cet exemple, le dispositif 1 comprend :
- un premier ensemble 2 ;
- un deuxième ensemble 4 ;
- un troisème ensemble 3 ; et
- un quatrième ensemble 5.

Il est à noter que ces quatre ensembles présentent des axes sensiblement confondus avec un axe principal de faisceau Δ. Bien évidemment, on pourrait imaginer d'autres modes de réalisation dans lesquels les ensembles ne seraient pas tous coaxiaux.

Le premier ensemble 2 est constitué de deux premières demi-platines 2_{A},2_{B} séparables et aptes à se refermer autour du faisceau électrique 8. Dans cet exemple, ces premières demi-platines 2_{A},2_{B} sont assemblées entre elles l'une contre l'autre, selon un plan de joint P. Les demi-platines présentent donc un plan de joint sensiblement rectiligne.

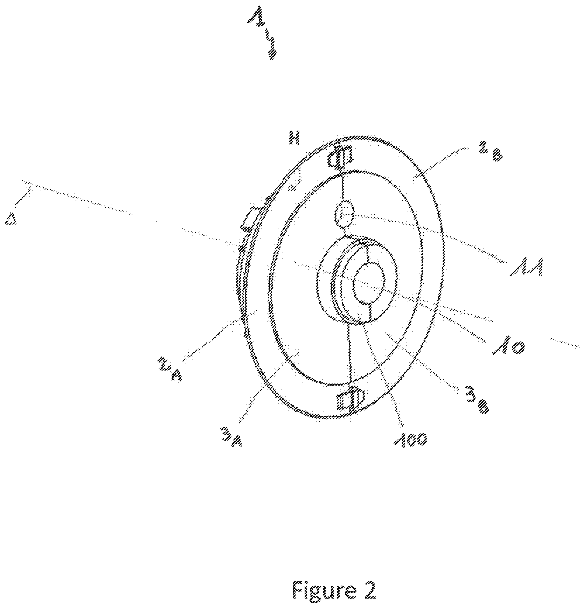

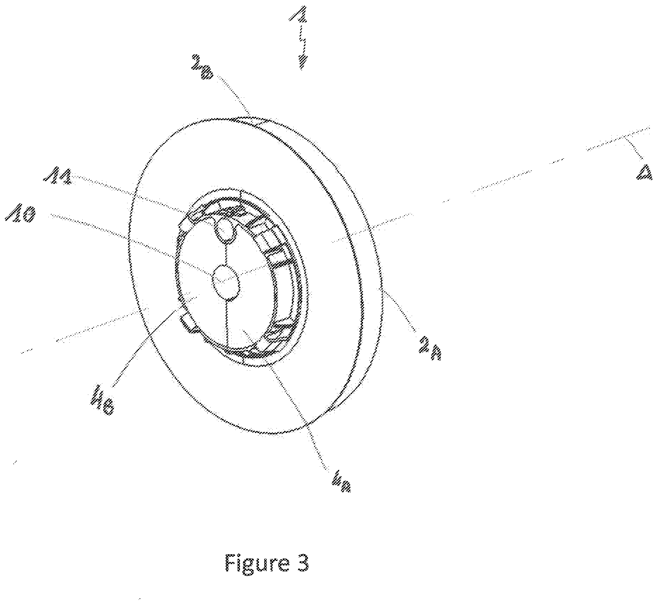

Comme illustré sur les figures 2 et 3, ce premier ensemble 2 possède un premier côté H qui est destiné, une fois monté dans un véhicule, à faire face à un habitacle de véhicule, et un deuxième côté M sensiblement opposé au premier côté. Ce deuxième côté peut par exemple être destiné à faire face au compartiment moteur, les faisceaux électriques 8 étant dans ce cas ceux qui proviennent de ce compartiment moteur pour aller vers l'habitacle.

Dans ce mode de réalisation, le premier ensemble 2 présente :
- une partie interne 10 creuse de profil tubulaire d'axe Δ destinée à recevoir le faisceau électrique 8 ;
- une partie externe coaxiale à la partie interne comprenant une lèvre 12 externe d'étanchéité destinée à venir en appui périphérique autour et contre un isolant 6 placé en périphérie de l'ouverture 9.

Cette lèvre 12 périphérique permet ainsi de former un appui du dispositif sur l'isolant lorsque celui-ci est monté par exemple dans un véhicule.

La partie interne 10 se prolonge par un rebord externe 100 à l'endroit du premier côté H. En d'autres termes, la face placée du côté H présente une protubérance suivant le contour de la partie interne 10.

Comme illustré notamment sur la figure 1, les deux premières platines 2_{A},2_{B} comprennent en outre des moyens de fixation complémentaires ménagés sur le premier côté H. Dans ce mode de réalisation, les moyens de fixation complémentaires sont présents sous la forme de deux accroches ménagées sur une des deux demi-platines et venant coopérer avec deux crochets placés en vis-à-vis sur l'autre demi-platine de sorte à les joindre fixement. Il est à noter que ces moyens de fixation peuvent être des moyens de fixation réversibles, ou même des moyens de fixation définitifs.

Par ailleurs, et comme représenté notamment en figure 3, le premier ensemble 2 comprend des moyens de retenue du dispositif sur la cloison 7. Ces moyens de retenue comprennent, dans ce mode de réalisation, des moyens d'enclipsage du premier ensemble, et donc du dispositif, sur la cloison 7. Il est à noter que les moyens de retenue peuvent comprendre, selon les modes de réalisation, d'autres éléments. Par exemple, on pourrait imaginer des moyens de retenue comprenant une lèvre permettant de bloquer le premier ensemble sur tout le contour, ou un système de paroi élastique permettant d'exercer une force sur tout le contour et donc de maintenir bloqué le dispositif.

Le premier ensemble comprend en outre une deuxième partie interne 11 creuse de profil tubulaire présentant un axe sensiblement confondu à l'axe principal de faisceau Δ. Cette deuxième partie interne creuse peut par exemple permettre le passage d'un dispositif de commande d'ouverture de capot.. Dans ce mode de réalisation, cette deuxième partie interne 11 présente un diamètre inférieur au diamètre de la première partie interne 11. Toutefois, on pourrait imaginer d'autres modes de réalisation dans lesquels les diamètres seraient égaux, voire dans lesquels le diamètre de la deuxième partie interne 11 serait supérieur.

Le dispositif 1 comprend en outre un deuxième ensemble 4 qui est, pour sa part, également constitué de deux demi-platines, appelées par la suite deuxièmes demi-platines 4_{A},4_{B} séparables et aptes à se refermer autour du faisceau électrique 8. Dans cet exemple, et de même que pour le premier ensemble, les deuxièmes demi-platines sont assemblées entre elles l'une contre l'autre selon le plan de joint P. Comme illustré sur les différentes figures, une portion de ces deuxièmes demi-platines 4_{A},4_{B} vient se loger de manière ajustée au contact de la partie interne 10 du premier ensemble 2. En d'autres termes, une portion présentant un profil tubulaire similaire au profil de la partie interne 10 est formé dans ce deuxième ensemble et vient se loger au voisinage de la partie interne 10, voire vient s'accoler à la partie interne 10 de sorte à former une « deuxième épaisseur ».

Comme illustré, le dispositif 1 comprend un troisième ensemble 3 qui est mis en oeuvre pour assurer une isolation phonique. Ce troisième ensemble est constitué de deux troisièmes platines 3_{A}, 3_{B} séparables et aptes à se refermer autour du faisceau électrique 8. Dans cet exemple, et de même que pour les premier 2 et deuxième 4 ensembles, les troisièmes demi-platines sont assemblées entre elles l'une contre l'autre suivant le plan de joint P.

Il est à noter que les troisièmes demi-platines 3_{A},3_{B} viennent se placer autour du rebord externe 100, autrement appelé protubérance, de la partie interne 10 du premier ensemble 2. En d'autres termes, ce troisième ensemble 3 est positionné du côté « habitacle » du premier ensemble 2, et est placé autour de la protubérance 100.

Par ailleurs, le troisième ensemble 3 présente un orifice ménagé dans le plan de joint P, de sorte que la deuxième partie interne 11 débouche sur le deuxième orifice et puisse former un « trou débouchant ».

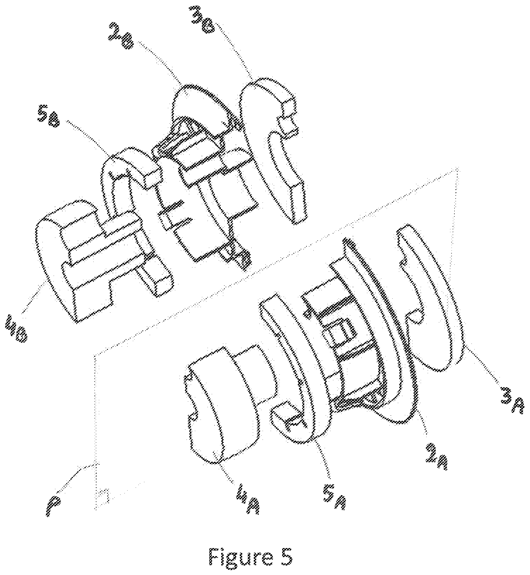

Enfin, le dispositif 1 comprend un quatrième ensemble 5 constitué de deux quatrièmes demi-platines 5_{A},5_{B} séparables. Comme pour les autres ensembles, les quatrièmes demi-platines 5_{A},5_{B} sont assemblées entre elles l'une contre l'autre selon le plan de joint P illustré en figure 5. Par ailleurs, ces quatrièmes platines 5_{A},5_{B} viennent se placer autour d'une portion respective desdites premières platines 2_{A},2_{B}. Ce quatrième ensemble 5, de profil tubulaire dans ce mode de réalisation, vient se placer contre le premier ensemble 2, au niveau du deuxième côté M correspondant dans ce mode de réalisation au côté « moteur ». Il permet d'améliorer l'insonorisation de l'habitacle vis-à-vis du compartiment moteur mais surtout permet d'améliorer l'étanchéité à l'air qui pourrait s'engouffrer par les parois du véhicule.

Dans ce mode de réalisation, les deuxième, troisième et quatrième ensembles sont réalisés en EPDM. Toutefois, on pourrait prévoir des modes de réalisation dans lesquels le matériau serait différent, tout en gardant les spécificités nécessaires à l'invention. Quant au premier ensemble, il est réalisé en matériau rigide de sorte à pouvoir se positionner de façon fiable.

## Revendications

1. Dispositif (1) de traversée d'un faisceau électrique (8) par une ouverture (9) d'une cloison (7) comprenant au moins un premier ensemble (2) présentant :
- une partie interne (10) creuse de profil tubulaire présentant un axe principal de faisceau (Δ) et destinée à recevoir le faisceau électrique ;
- une partie externe coaxiale à la partie interne comprenant une lèvre (12) externe d'étanchéité destinée à venir en appui périphérique autour et contre un isolant (6) placé en périphérie de l'ouverture (9),
ledit premier ensemble étant constitué de deux premières demi-platines (2_{A},2_{B}) séparables aptes à se refermer autour du faisceau électrique, lesdites demi-platines étant assemblées entre elles l'une contre l'autre, et
- un deuxième ensemble (4), constitué de deux deuxièmes demi-platines (4_{A},4_{B}) séparables aptes à se refermer autour du faisceau électrique, lesdites demi-platines étant assemblées entre elles l'une contre l'autre, au moins une portion desdites demi-platines venant se loger de manière ajustée au contact de la partie interne (10) du premier ensemble (2),
**caractérisé en ce que** le dispositif comprend en outre :
un troisième ensemble (3) d'isolation phonique, constitué de deux troisièmes platines (3_{A},3_{B}) séparables aptes à se refermer autour du faisceau électrique, lesdites platines étant assemblées entre elles l'une contre l'autre,
lesdites troisièmes demi-platines (3_{A},3_{B}) venant se placer autour du rebord externe (100) de la partie interne (10) du premier ensemble (2).

2. Dispositif selon la revendication 1, le premier ensemble présentant un premier côté (H) destiné à faire face à un habitacle de véhicule et un deuxième côté (M) sensiblement opposé au premier côté, la partie interne (10) se prolongeant par un rebord externe (100) à l'endroit du premier côté (H).

3. Dispositif selon l'une des revendications précédentes, ledit premier ensemble comprenant une deuxième partie interne (11) creuse de profil tubulaire présentant un axe sensiblement parallèle à l'axe principal de faisceau (Δ) destinée à recevoir le faisceau électrique.

4. Dispositif selon la revendication 3, ledit troisième ensemble présentant un orifice, de sorte que la deuxième partie interne (11) débouche sur ledit orifice.

5. Dispositif selon l'une des revendications précédentes, ledit dispositif comprenant en outre un quatrième ensemble (5) constitué de deux quatrièmes platines (5_{A},5_{B}) séparables, lesdites quatrièmes platines (5_{A},5_{B}) étant assemblées entre elles l'une contre l'autre, chacune desdites quatrièmes platines (5_{A},5_{B}) venant se placer autour d'une portion respective desdites premières platines (2_{A},2_{B}), en appui contre la lèvre.

6. Dispositif selon l'une des revendications précédentes, les deux premières platines (2_{A},2_{B}) comprenant des moyens de fixation complémentaires ménagés sur le premier côté (H).

7. Dispositif selon l'une des revendications précédentes, ledit premier ensemble (2) comprenant des moyens de retenue dudit dispositif sur la cloison (7).

8. Dispositif selon la revendication 7, lesdits moyens de retenue comprenant un système d'enclipsage.

9. Dispositif selon l'une des revendications précédentes, l'un au moins desdits deuxième ensemble (4), troisième ensemble (3), quatrième ensemble (5) étant réalisé en EPDM.

10. Dispositif selon l'une des revendications précédentes, le premier ensemble (2) étant réalisé en matériau rigide.

## Patentansprüche

1. Vorrichtung (1) zur Durchführung eines Kabelbündels (8) durch eine Öffnung (9) einer Trennwand (7), die wenigstens eine erste Anordnung (2) umfasst, welche aufweist:
- einen hohlen inneren Teil (10) mit rohrförmigem Profil, der eine Bündelhauptachse (Δ) aufweist und dazu bestimmt ist, das Kabelbündel aufzunehmen;
- einen mit dem inneren Teil koaxialen äußeren Teil, der eine äußere Dichtlippe (12) umfasst, die dazu bestimmt ist, mit ihrem Umfang um einen und an einem Isolator (6) zur Anlage zu kommen, der am Umfang der Öffnung (9) angeordnet ist,
wobei die erste Anordnung aus zwei trennbaren ersten Plattenhälften (2_{A}, 2_{B}) besteht, die geeignet sind, sich um das Kabelbündel herum wieder zu schließen, wobei die Plattenhälften aneinandergefügt miteinander verbunden werden, und
- eine zweite Anordnung (4), die aus zwei trennbaren zweiten Plattenhälften (4_{A}, 4_{B}) besteht, die geeignet sind, sich um das Kabelbündel herum wieder zu schließen, wobei die Plattenhälften aneinandergefügt miteinander verbunden werden, wobei wenigstens ein Abschnitt der Plattenhälften passgenau in Kontakt mit dem inneren Teil (10) der ersten Anordnung (2) gelangt,
**dadurch gekennzeichnet, dass** die Vorrichtung außerdem umfasst:
- eine dritte Anordnung (3) zur Schallisolierung, die aus zwei trennbaren dritten Platten (3_{A}, 3_{B}) besteht, die geeignet sind, sich um das Kabelbündel herum wieder zu schließen, wobei die Platten aneinandergefügt miteinander verbunden werden,
wobei die dritten Plattenhälften (3_{A}, 3_{B}) um den äußeren Rand (100) des inneren Teils (10) der ersten Anordnung (2) herum zu liegen kommen.

2. Vorrichtung nach Anspruch 1, wobei die erste Anordnung eine erste Seite (H), die dazu bestimmt ist, einem Fahrzeuginnenraum zugewandt zu sein, und eine der ersten Seite im Wesentlichen gegenüberliegende zweite Seite (M) aufweist, wobei sich der innere Teil (10) durch einen äußeren Rand (100) am Ort der ersten Seite (H) verlängert.

3. Vorrichtung nach einem der vorhergehenden Ansprüche, wobei die erste Anordnung einen zweiten hohlen inneren Teil (11) mit rohrförmigem Profil umfasst, der eine zur Bündelhauptachse (Δ) im Wesentlichen parallele Achse aufweist und dazu bestimmt ist, das Kabelbündel aufzunehmen.

4. Vorrichtung nach Anspruch 3, wobei die dritte Anordnung eine Öffnung aufweist, derart, dass der zweite innere Teil (11) in diese Öffnung mündet.

5. Vorrichtung nach einem der vorhergehenden Ansprüche, wobei die Vorrichtung außerdem eine vierte Anordnung (5) umfasst, die aus zwei trennbaren vierten Platten (5_{A}, 5_{B}) besteht, wobei die vierten Platten (5_{A}, 5_{B}) aneinandergefügt miteinander verbunden werden, wobei jede der vierten Platten (5_{A}, 5_{B}) um einen jeweiligen Abschnitt der ersten Platten (2_{A}, 2_{B}) herum zu liegen kommt, in Anlage an der Lippe.

6. Vorrichtung nach einem der vorhergehenden Ansprüche, wobei die zwei ersten Platten (2_{A}, 2_{B}) komplementäre Befestigungsmittel umfassen, die auf der ersten Seite (H) ausgebildet sind.

7. Vorrichtung nach einem der vorhergehenden Ansprüche, wobei die erste Anordnung (2) Mittel zum Halten der Vorrichtung an der Trennwand (7) umfasst.

8. Vorrichtung nach Anspruch 7, wobei die Haltemittel ein Schnappverbindungssystem umfassen.

9. Vorrichtung nach einem der vorhergehenden Ansprüche, wobei die zweite Anordnung (4), die dritte Anordnung (3) und/oder die vierte Anordnung (5) aus EPDM hergestellt sind.

10. Vorrichtung nach einem der vorhergehenden Ansprüche, wobei die erste Anordnung (2) aus starrem Material hergestellt ist.

## Claims

1. Device (1) for passage of a cable bundle (8) through an opening (9) of a partition (7) comprising at least a first assembly (2) having:
- a hollow internal part (10) with a tubular profile having a bundle main axis (Δ) and intended to receive the cable bundle;
- an external part coaxial to the internal part comprising a sealing external lip (12) intended to peripherally bear around and against an insulator (6) placed at the periphery of the opening (9),
said first assembly being made up of two separable first half-plates (2_{A}, 2_{B}) that can close around the cable bundle, said half-plates being assembled together, one against the other, and
- a second assembly (4), made up of two separable second half-plates (4_{A}, 4_{B}) that can close around the cable bundle, said half-plates being assembled together, one against the other, at least one portion of said half-plates being tightly housed on contact with the internal part (10) of the first assembly (2),
**characterized in that** the device further comprises:
a third assembly (3) for sound insulation, made up of two separable third plates (3_{A}, 3_{B}) that can close around the cable bundle, said plates being assembled together, one against the other,
said third half-plates (3_{A}, 3_{B}) being placed around the external shoulder (100) of the internal part (10) of the first assembly (2).

2. Device according to Claim 1, the first assembly having a first side (H) intended to face a vehicle passenger compartment and a second side (M) substantially opposite the first side, the internal part (10) extending via an external shoulder (100) at the location of the first side (H).

3. Device according to one of the preceding claims, said first assembly comprising a second hollow internal part (11) with a tubular profile having an axis substantially parallel to the bundle main axis (Δ), which second hollow internal part is intended to receive the cable bundle.

4. Device according to Claim 3, said third assembly having a hole, such that the second internal part (11) opens onto said hole.

5. Device according to one of the preceding claims, said device further comprising a fourth assembly (5) made up of two separable fourth plates (5_{A}, 5_{B}), said fourth plates (5_{A}, 5_{B}) being assembled together, one against the other, each of said fourth plates (5_{A}, 5_{B}) being placed around a respective portion of said first plates (2_{A}, 2_{B}), bearing against the lip.

6. Device according to one of the preceding claims, the two first plates (2_{A}, 2_{B}) comprising fixing complimentary means provided on the first side (H).

7. The device according to one of the preceding claims, said first assembly (2) comprising means for retaining said device on the partition (7).

8. Device according to Claim 7, said retaining means comprising a clipping system.

9. Device according to one of the preceding claims, at least one of said second assembly (4), third assembly (3), and fourth assembly (5) being made from EPDM.

10. Device according to one of the preceding claims, the first assembly (2) being produced from rigid material.
